# EUROPÄISCHE PATENTSCHRIFT

(11) **EP 1 382 099 B1**
(45) Veröffentlichungstag und Bekanntmachung des Hinweises auf die Patenterteilung: **02.04.2014**
(21) Anmeldenummer: 02708230.4
(22) Anmeldetag: 07.02.2002
(51) Int. Cl.: H02B 11/24

(54) **SCHUTZEINRICHTUNG GEGEN BERÜHREN SPANNUNGSFÜHRENDER KONTAKTE IN EINEM EINSCHUBRAHMEN EINES SCHALTGERÄTES**
PROTECTIVE UNIT TO PREVENT CONTACT WITH CONDUCTIVE CONTACTS IN A WITHDRAWABLE RACK OF A SWITCHING DEVICE
DISPOSITIF DE PROTECTION PERMETTANT D'EMPECHER DE TOUCHER LES CONTACTS CONDUCTEURS D'UN CADRE A GLISSIERE D'UN APPAREIL DE COMMUTATION

(30) Priorität: 23.04.2001 DE 10120750
(43) Veröffentlichungstag der Anmeldung: 21.01.2004
(73) Patentinhaber: Siemens Aktiengesellschaft, 80333 München (DE)
(72) Erfinder: DEYLITZ, Erhard, 13125 Berlin (DE); MAREK, Kathrina, 16341 Zepernick (DE)
(86) Internationale Anmeldenummer: PCT/DE2002/000484
(87) Internationale Veröffentlichungsnummer: WO 2002/087041

(56) Entgegenhaltungen:
- EP-A- 0 577 111

## Beschreibung

Die Erfindung liegt auf dem Gebiet der elektrischen Schalter und ist bei der konstruktiven Gestaltung eines Einschubrahmens für ein verschiebbar angeordnetes Schaltgerät anzuwenden, bei dem eine Schutzeinrichtung gegen Berühren spannungsführender Kontakte vorgesehen ist.

Bei einem bekannten Einschubrahmen ist eine Schutzeinrichtung mit zwei beweglichen Schutzplatten - die zur Freigabe von in einer Abdeckplatte ausgebildeten Zugangsöffnungen zu ankommenden und abgehenden Kontakten verschiebbar sind - und eine Vorrichtung zum Betätigen der Schutzplatten vorgesehen. Dabei weist die Vorrichtung ein zum Verschieben der Schutzplatte dienendes erstes Funktionselement und ein zum Arretieren der Schutzplatte in zumindest einer Endstellung dienendes zweites Funktionselement auf (EP 0 803 140 B1). Bei diesem bekannten Schalter ist das erste Funktionselement als Schwenkarm an einem Kulissenhebel ausgebildet, der Teil einer Hebelanordnung ist, die zur Übersetzung einer Einfahrbewegung des Schaltgerätes in eine Verschiebungsbewegung der Schutzplatte dient. Als zweites Funktionselement dient eine an einer Fahrschiene für das Schaltgerät angebrachte Sperrnase, die zwischen Auslegern der beiden Kulissenhebel einführbar ist. Um ein Schwenken der Kulissenhebel und damit ein Verschieben der Schutzplatten aus der gewählten Endstellung zu verhindern, ist die Fahrschiene gegen Verschieben beispielsweise durch ein Vorhängeschloss sicherbar. Ein handbetätigtes Verschieben der Schutzplatten ist bei dieser Anordnung nur durch Betätigung der zur Bereitstellung eines großen Übersetzungsverhältnisses vergleichsweise kompliziert ausgestalteten Hebelanordnung realisierbar.

Ausgehend von einer Schutzeinrichtung mit den Merkmalen des Oberbegriffes des Anspruches 1 (EP 0 803 140 B1) liegt der Erfindung die Aufgabe zugrunde, den Betätigungsmechanismus so zu gestalten, dass eine Berücksichtigung der konstruktiven Gestaltung anderer Mechanismen nicht erforderlich ist.

Diese Aufgabe wird erfindungsgemäß dadurch gelöst, dass die Vorrichtung von einem nach Art einer Blattfeder biegsamen, an der den Kontakten zugewandten Seite an der Schutzplatte gehaltenen Haken gebildet ist, an dessen abgewinkeltem Endschenkel die Funktionselemente ausgebildet sind, wobei bei in Ruhestellung befindlichem Haken das erste Funktionselement einen in der Schutzplatte ausgebildeten Führungsschlitz durchgreift. - Aufgrund einer derartigen Ausgestaltung ist sichergestellt, dass die Schutzplatten unabhängig von einer ihnen zugeordneten Übersetzungsmechanik verschiebbar und unabhängig von der Lage weiterer Teile arretierbar sind.

Ein Ausführungsbeispiel der neuen Schutzeinrichtung ist in den Figuren 1 bis 8 dargestellt. Dabei zeigen
Figur 1 einen Ausschnitt eines mit einem Trennkontaktgehäuse versehenen Einschubrahmens,
Figur 2 das Trennkontaktgehäuse gemäß Figur 1, an dem eine geschnitten dargestellte Schutzeinrichtung montiert ist, die vier gleich ausgebildete nach Art einer Blattfeder biegsame Haken zur Betätigung der Schutzplatten aufweist,
Figur 3 eine vergrößerte Darstellung eines Hakens,
Figur 4 eine aus zwei Haken gebildete Einheit zum Betätigen zweier übereinander angeordneter Schutzplatten,
Figur 5 eine vormontierte Schutzeinrichtung mit integrierter Vorrichtung zur Betätigung der Schutzplatten,
Figuren 6 bis 8 Die Schutzeinrichtung bei drei verschiedenen Stellungen der Haken.

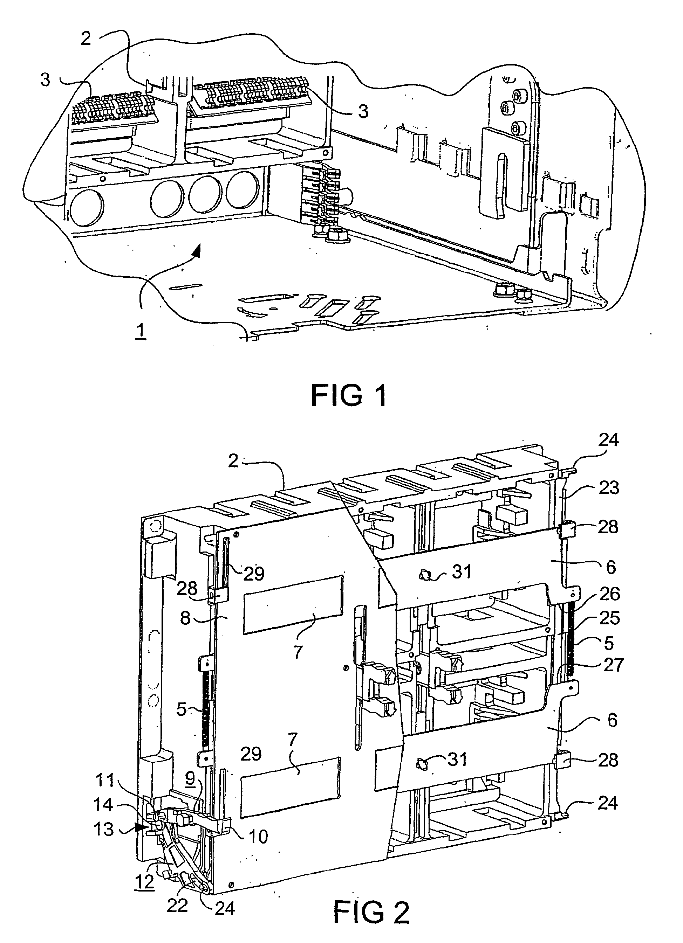

Der in Figur 1 gezeigte Einschubrahmen 1 ist mit einem Trennkontaktgehäuse 2 versehen, das zur Aufnahme von spannungsführenden Kontakten 3 dient, von denen in nicht weiter dargestellter Weise ankommende und abgehende Kontakte in übereinander liegenden Ebenen angeordnet sind.

Gemäß der Figur 2 ist an dem Trennkontaktgehäuse 2 eine Schutzeinrichtung 4 gegen Berühren der spannungsführenden Kontakte montiert. Hierbei weist die Schutzeinrichtung 4 zwei den in den übereinander liegenden Ebenen angeordneten Kontakten zugeordnete, mittels zweier Zugfedern 5 gekoppelte bewegliche Schutzplatten 6, eine mit Zugangsöffnungen 7 zu den Kontakten versehene Abdeckplatte 8 sowie zwei gleich ausgebildete Hebelanordnungen zur Betätigung der Schutzplatten 6 auf. Jede der zwei Hebelanordnungen weist drei Hebel auf, von denen ein erster Hebel 9 an einem Freien Ende 10 mittels eines nicht dargestellten Schaltgerätes betätigbar ist. Das andere Ende des Hebels 9 ist mittel eines Verbindungsgelenkes 11 an einem zweiarmigen zweiten Hebel 12 der Hebelanordnung angelenkt, wobei das Verbindungsgelenk 11 nahe eines ortsfesten Schwenklagers 13 des zweiten Hebels angeordnet ist. Das ortsfeste Schwenklager 13 ist dabei von zwei Lagerzapfen 14 und zwei den Lagerzapfen 14 zugeordneten Lagerschalen gebildet (in der Figur ist nur einer der Lagerzapfen 14 und nur eine Lagerschale sichtbar).

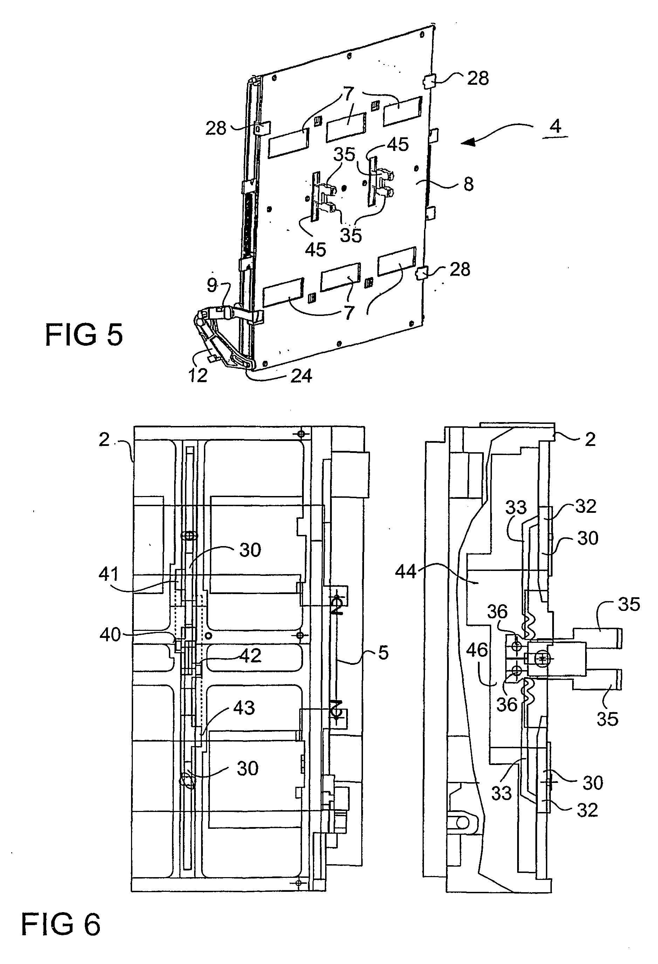

Während an dem ersten Hebelarm des zweiten Hebels 12 der erste Hebel angreift, sind dem zweiten Hebelarm des zweiten Hebels 12 zwei hakenartige, quer zur Schwenkrichtung des zweiten Hebels von dem zweiten Hebel abragende Ansätze ausgebildet, von denen eine je nach Anordnung der Hebelanordnung an der einen oder der anderen Seiten des Trennkontaktträgers eine bogenförmige Kante am Trennkontaktgehäuse hintergreift und damit den zweiten Hebel axial fixiert. In dem zweiten Hebelarm ist weiterhin ein Langloch 22 ausgebildet. In das Langloch 22 greift ein als Schubstange 23 ausgebildeter dritter Hebel der Hebelanordnung mit einem Zapfen 24 ein. Die Schubstange ist quer zu ihrer Verschiebungsrichtung symmetrisch ausgebildet und weist an beiden Enden je einen Zapfen 24 auf, von denen je nach Anordnung der Hebelanordnung an der rechten oder linken Seite des Trennkontaktgehäuses 2 einer in das im zweiten Hebelarm des zweiten Hebels 12 ausgebildete Langloch 22 eingreift. Weiterhin weist die Schubstange 23 einen mittig angeordneten, in die Ebene der Schutzplatten 6 ragenden Vorsprung 25 auf, von dessen Seitenflächen 26, 27 je nach Anordnung der Schubstange 23 an der rechten oder linken Seitenwand des Trennkontaktgehäuses 2 die eine eine der oberen Schutzplatte 6 zugeordnete Stützfläche 26 und die andere eine der unteren Schutzplatte 6 zugeordnete Haltefläche 27 bildet. An der Schubstange sind weiterhin hakenartige Ansätze 28 ausgebildet, die die mit den Zugangsöffnungen 7 versehene Abdeckplatte 8 im Bereich je zweier, an der rechten und der linken Seite ausgebildeten, Führungsöffnungen 29 schnappriegelartig hintergreifen. Dabei sind die beiden Schubstangen 23, die beiden beweglichen Schutzplatten 6, die Abdeckplatte 8 und vier an der den Kontakten zugewandten Seite an den Schutzplatten 6 gehaltene, nach Art einer Blattfeder biegsame Haken 30 zu einer Funktionseinheit verbunden, sobald die beiden dritten Hebel 23 mittels der hakenartigen Ansätze 28 in den Führungsöffnungen 29 der Abdeckplatte 8 verrastet sind. Diese in der Figur 5 veranschaulichte Funktionseinheit kann auf einfache Weise vormontiert und durch Einschieben des Zapfens 24 in das Langloch 22 mit den Hebeln 9 und 12 der Hebelanordnung komplettiert werden. Die nach Art einer Blattfeder biegsamen Haken sind in Aufnahmeöffnungen (Kammern) 46 des Trennkontaktgehäuses angeordnet und durchgreifen Führungsschlitze der Abdeckplatte 8.

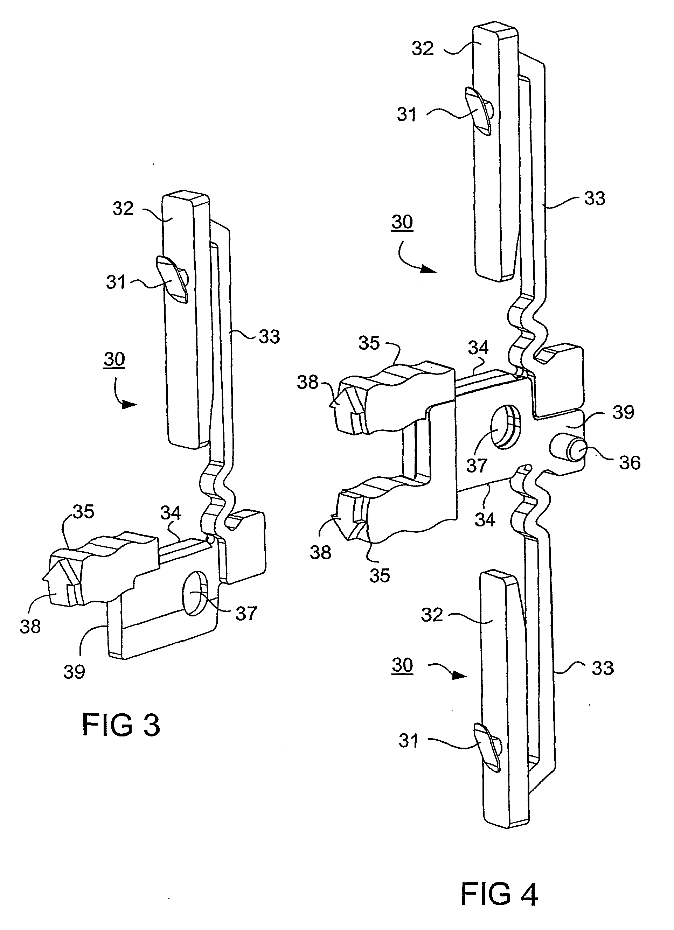

Gemäß der Figur 3 weisen die nach Art einer Blattfeder biegsamen Haken 30 eine mit einem Befestigungselement 31 versehene Anlagefläche 32 auf, an der ein lang ausgebildeter, an seinem Ende wellenartig gebogener Basisschenkel 33 des Hakens befestigt ist. Der abgewinkelte Endschenkel 34 des Hakens 30 ist flächig ausgebildet und weist mehrere Funktionselemente auf. Dabei dient ein als Nase ausgebildetes erstes Funktionselement als Handgriff 35 zum Verschieben des Hakens 30, ein als Zapfen 36 (vgl. Figur 4) ausgebildetes zweites Funktionselement zum Arretieren einer mit dem Haken 30 verbundenen Schutzplatte (6 in der Figur 1) in einer Endstellung, ein als Fläche mit gegenüber dem Handgriff um die Hälfte reduzierten Querschnitt ausgebildetes drittes Funktionselement zum ineinander Schachteln eines ersten und eines zweiten - gegenüber dem ersten um 180° gedrehten - Hakens 30 (vgl. Figur 4) und eine als Bohrung 37 ausgebildetes Funktionselement zur Aufnahme eines Sicherungselementes (beispielsweise eines Sicherheitsschlosses) auf. An der Stirnfläche des Handgriffes 35 ist ein Pfeil ausgeformt, der dem die Vorrichtung bedienenden Personal die Verschiebungsrichtung signalisiert, in der die gewählte Schutzplatte 6 getrennt verschoben und arretiert werden kann.

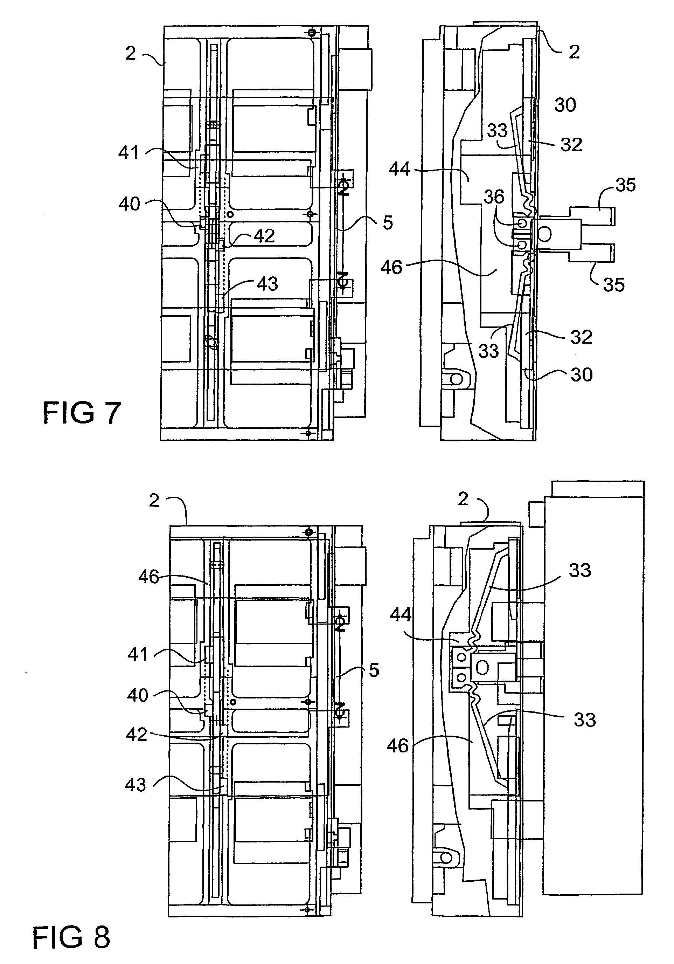

Gemäß der Figur 4 bilden zwei ineinander geschachtelte Haken 30 eine Betätigungseinheit, die zwei seitliche Führungsflächen 39 aufweist, über die im Bereich des Trennkontaktgehäuses nur die zur Arretierung dienenden Zapfen 36 überstehen. Dabei ragt der eine Zapfen nach links und der andere Zapfen nach rechts, so dass gemäß der Figuren 6 bis 8 dem getrennt nach oben verschiebbaren Haken 30 eine mit einer ersten 40 und einer zweiten Rastnut 41 versehene erste Innenfläche und dem getrennt nach unten verschiebbaren Haken eine mit einer dritten 42 und einer vierten Rastnut 43 versehene zweite Innenfläche zugeordnet ist. Somit sind die beiden übereinander liegenden Schutzplatten 6 bei aus dem Einschubrahmen entnommenem Schaltgerät in vier verschiedenen Stellungen arretierbar und mit einem Bügelschloss sicherbar. - Bei der in Figur 6 dargestellten Stellung der Haken 30 befinden sich beide Schutzplatten in Schließstellung, bei der der rechte Lagerzapfen in der ersten Rastnut 40 und der linke Lagerzapfen in der dritten Rastnut 42 gehalten ist. Durch Hervorbiegen der abgewinkelten Endschenkel 32 der Haken 30 gelangt die Bohrung 37 vor die Abdeckplatte 8 (vgl. Figur 7) und die Schutzplatten 6 können in dieser arretierten Stellung durch Einhängen eines Bügelschlosses gesichert werden. - Der obere Haken 30 kann zum Öffnen der oberen Kontakte getrennt nach oben (linker Zapfen 36 rastet in zweiter Rastnut 41 ein) und der untere Haken 30 kann zum Öffnen der unteren Kontakte getrennt nach unten (rechter Zapfen rastet in vierte Rastnut 43 ein) verschoben werden.

Gemäß der Figur 8 kann der abgewinkelte Schenkel 34 des Hakens 30 bei einfahrendem Schaltgerät und dem dabei bewirkten Anheben der Schutzplatten 6 aus der Bewegungsbahn des Schaltgerätes heraus in eine in dem Trennkontaktgehäuse 2 ausgebildete Ausnehmung 44 gebogen werden.

## Patentansprüche

1. Schutzeinrichtung (4) gegen Berühren spannungsführender Kontakte (3) in einem Einschubrahmen (1) eines Schaltgerätes mit zumindest einer zum Freilegen von Zugangsöffnungen (7) zu den Kontakten aus einer Ruhestellung verschiebbaren Schutzplatte (6) und mit einer Vorrichtung zum Betätigen der Schutzplatte,
bei der die Vorrichtung ein zum Verschieben der Schutzplatte dienendes erstes Funktionselement (35) und ein zum arretieren der Schutzplatte in zumindest einer Endstellung dienendes zweites Funktionselement (36) aufweist,
**dadurch gekennzeichnet,**
**dass** die Vorrichtung von einem nach Art einer Blattfeder biegsamen, an der den Kontakten (3) zugewandten Seite an der Schutzplatte (6) gehaltenen Haken (30) gebildet ist, an dessen abgewinkeltem Endschenkel (34) die Funktionselemente (35,36) ausgebildet sind,
wobei bei in Ruhestellung befindlichem Haken (30) das erste Funktionselement (35) einen in einer Abdeckplatte (8) ausgebildeten Führungsschlitz (45) durchgreift.

2. Schutzeinrichtung nach Anspruch 1,
**dadurch gekennzeichnet,**
**dass** das zweite Funktionselement als zapfen (36) ausgebildet ist, der quer zur Biegerichtung des Hakens (30) von dem Haken abragt und dem quer zur Verschiebungsrichtung der Schutzplatte (6) verlaufende Stützflächen zugeordnet sind.

3. Schutzeinrichtung nach einem der Ansprüche 1 oder 2,
**dadurch gekennzeichnet,**
**dass** der Basisschenkel (33) des Hakens an seinem dem abgewinkelten Endschenkel (34) zugewandten Ende wellenartig gebogen ist.

4. Schutzeinrichtung nach einem der Ansprüche 1 bis 3,
**dadurch gekennzeichnet,**
**dass** der Haken (30) in einer Kammer (46) eines im Einschubrahmen (1) angeordneten Trennkontaktgehäuses (2) geführt ist.

5. Schutzeinrichtung nach einem der Ansprüche 1 bis 4,
**dadurch gekennzeichnet,**
**dass** zur gleichzeitigen und/oder getrennten Betätigung von zwei übereinander angeordneten, mittels einer Feder (5) in Ruhestellung gehaltenen Schutzplatten (6) jeder der beiden Schutzplatten (6) ein Haken (30) zugeordnet ist, wobei die beiden Haken gleich ausgebildet und um 180° gedreht ineinander schachtelbar sind.

## Claims

1. Protective unit (4) to prevent contact with conductive contacts (3) in a withdrawable rack (1) of a switching device having at least one protective plate (6), which can be displaced from a rest position to expose access openings (7) to the contacts, and having an apparatus for actuating the protective plate,
in which the apparatus has a first functional element (35) serving to displace the protective plate and a second functional element (36) serving to stop the protective plate in at least one end position,
**characterised in that**
the apparatus is formed by a hook (30), which is flexible in the manner of a leaf spring and is held on the protective plate (6) on the side facing the contacts (30), with the functional elements (35, 36) configured on its angled end limb (34),
wherein, when the hook (30) is in the rest position, the first functional element (35) engages through a guide slot (45) configured in a cover plate (8).

2. Protective unit according to claim 1,
**characterised in that**
the second functional element is configured as a pin (36), which projects from the hook perpendicular to the bending direction of the hook (30) and to which support surfaces running perpendicular to the displacement direction of the protective plate (6) are assigned.

3. Protective unit according to one of claims 1 or 2,
**characterised in that**
the base limb (33) of the hook is bent in a wave-like manner at its end facing the angled end limb (34).

4. Protective unit according to one of claims 1 to 3,
**characterised in that**
the hook (30) is guided in a chamber (46) of an isolating contact housing (2) disposed in the withdrawable rack (1).

5. Protective unit according to one of claims 1 to 4,
**characterised in that**
for the simultaneous and/or separate actuation of two protective plates (6), which are disposed one above the other and held in the rest position by means of a spring (5), each of the two protective plates (6) is assigned a hook (30), the two hooks being configured in an identical manner and being able to nest in one another when rotated through 180°.

## Revendications

1. Dispositif ( 4 ) de protection empêchant de toucher des contacts ( 3 ) sous tension dans un cadre ( 1 ) de baie d'un appareil de commutation, comprenant au moins une plaque ( 6 ) de protection pouvant, pour dégager des ouvertures ( 7 ) d'accès aux contacts, être déplacée d'une position de repos et comprenant un dispositif pour l'actionnement de la plaque de protection,
dans lequel le dispositif a un premier élément ( 35 ) fonctionnel servant au déplacement de la plaque de protection et un deuxième élément ( 36 ) fonctionnel servant à arrêter la plaque de protection dans au moins une position d'extrémité, **caractérisé**
**en ce que** le dispositif est formé par un crochet ( 30 ), qui est souple à la manière d'un ressort à lame, qui est maintenu du côté tourné vers les contacts ( 3 ) à la plaque ( 6 ) de protection et à la branche ( 34 ) d'extrémité coudée duquel sont constitués les éléments ( 35, 36 ) fonctionnels,
dans lequel, lorsque le crochet ( 30 ) se trouve en position de repos, le premier élément ( 35 ) fonctionnel passe dans une fente ( 35 ) de guidage formée dans une plaque ( 8 ) de recouvrement.

2. Dispositif de protection suivant la revendication 1,
**caractérisé**
**en ce que** le deuxième élément fonctionnel est constitué sous la forme d'un tenon ( 36 ), qui fait saillie du crochet transversalement à la direction de flexion du crochet ( 30 ) et auquel sont associées des surfaces d'appui s'étendant transversalement à la direction de déplacement de la plaque ( 6 ) de protection.

3. Dispositif de protection suivant l'une des revendications 1 ou 2,
**caractérisé**
**en ce que** la branche ( 33 ) de base du crochet est courbée à la manière d'une ondulation à son extrémité tournée vers la branche ( 34 ) d'extrémité coudée.

4. Dispositif de protection suivant l'une des revendications 1 à 3,
**caractérisé**
**en ce que** le crochet ( 30 ) est guidé dans une chambre ( 46 ) d'un boîtier ( 2 ) de contact de séparation disposé dans le cadre ( 1 ) de baie.

5. Dispositif de protection suivant l'une des revendications 1 à 4,
**caractérisé**
**en ce que**, pour l'actionnement simultané et/ou séparé de deux plaques ( 6 ) de protection disposées l'une au-dessus de l'autre et maintenues dans la position de repos au moyen d'un ressort ( 5 ), il est associé, à chaque plaque des deux plaques ( 6 ) de protection, un crochet ( 30 ), les deux crochets étant constitués de la même façon et pouvant s'emboîter l'un dans l'autre en tournant de 180°.
